# EUROPÄISCHE PATENTSCHRIFT

(11) **EP 3 645 155 B1**
(45) Veröffentlichungstag und Bekanntmachung des Hinweises auf die Patenterteilung: **04.08.2021**
(21) Anmeldenummer: 18737825.2
(22) Anmeldetag: 26.06.2018
(51) Int. Cl.: B01J 8/00

(54) **VORRICHTUNG UND VERFAHREN ZUM ENTLEEREN VON KÖRNIGEM KATALYSATORMATERIAL AUS EINEM REAKTOR, INSBESONDERE DRUCKBEHÄLTER**
DEVICE AND METHOD FOR THE REMOVING OF GRANULAR CATALYST MATERIAL FROM A REACTOR, IN PARTICULAR A PRESSURE VESSEL
DISPOSITIF ET PROCÉDÉ POUR VIDER UN MATÉRIAU CATALYTIQUE GRANULEUX D'UN RÉACTEUR, EN PARTICULIER D'UN RÉCIPIENT SOUS PRESSION

(30) Priorität: 28.06.2017 DE 102017114313
(43) Veröffentlichungstag der Anmeldung: 06.05.2020
(73) Patentinhaber: Buchen Industrial-Catalyst-Service GmbH, 50735 Köln (DE)
(72) Erfinder: GOEMANS, Piet, 3088 Rotterdam (NL); KOCH, Henning, 53879 Euskirchen (DE)
(74) Vertreter: Patentanwälte Bauer Vorberg Kayser
(86) Internationale Anmeldenummer: PCT/EP2018/067036
(87) Internationale Veröffentlichungsnummer: WO 2019/002248

(56) Entgegenhaltungen:
- JP-A- S6 223 433
- KR-B1- 101 580 391
- US-A1- 2003 218 085

## Beschreibung

Die Vorrichtung und das Verfahren zum Entleeren von körnigem Katalysatormaterial aus einem Reaktor, insbesondere Druckbehälter, sind vorzugsweise für industrielle Anwendungen im Bereich der Großchemie, vorzugsweise Erdölchemie, bestimmt. Die dabei verwendeten Druckbehälter sind zumeist im Wesentlichen zylindrisch und haben typischerweise einen Durchmesser von 1 bis 7 m und eine Höhe von 5 bis 40 m. Sie weisen oben ein Mannloch auf, das einen Zugang in das Innere ermöglicht. Durch dieses Mannloch oder eine ähnliche Einrichtung muss das erschöpfte Katalysatormaterial aus dem Reaktor heraus transportiert werden. Unten am Reaktor befindet sich eine Produktabfuhr, sie wird gemäß der vorliegenden Erfindung nicht für das Entleeren verwendet. Das körnige Katalysatormaterial befindet sich in einem ortsfesten Bett und füllt den größten Teil des Inneren des Reaktors aus. Zwischen den Körnern ist ausreichend Platz für den Durchtritt von gasförmigen oder auch flüssigen Stoffen von oben nach unten im Reaktor.

Die Aktivität eines Katalysators lässt im Laufe der Zeit bedingt durch eine Vielzahl von Faktoren nach. In der Regel muss dann der Katalysator ausgetauscht werden. Hierzu ist es notwendig, den Katalysator aus dem Inneren des Reaktors zu entfernen. In einigen Fällen vergrößert sich das Volumen der Körner aus Katalysatormaterial während des praktischen Betriebs, dies führt zu einem Kompaktieren und erschwert das Entleeren. Aber auch andere Einflüsse können dazu führen, dass die Körner mehr oder weniger stark zusammenhängen. Aus Erfahrung kann man sagen, dass etwa in 25 % der in der chemischen Industrie anzutreffenden Fälle das Katalysatormaterial immer noch frei fließend ist, wenn die Entleerung beginnt. In etwa 50 % der Fälle sind die Körner miteinander verklebt oder anderweitig miteinander verbunden, hier ist es notwendig, die kompakte Substanz aus Körnern aufzulockern, beispielsweise händisch durch entsprechende einfache Werkzeuge. In den letzten 25 % der Fälle sind die Körner miteinander verbacken und es müssen schon erhebliche mechanische Mittel eingesetzt werden, um die fest zusammenhängende Masse aus dem Reaktor entfernen zu können.

Die Erfindung richtet sich insbesondere auf die genannten 50 % der Fälle verklebter Körner und die 25 % der Fälle immer noch frei fließenden Materials aus den Körnern. Sie richtet sich auch, aber nicht bevorzugt, auf ein Entleeren der eine fest zusammenhängende Masse an Körnern bildenden Füllung des Reaktors.

Aus der US 9,566,570 B2 ist ein Verfahren zum Entleeren bekannt, bei dem ein Gas mit einem bestimmten Gehalt an Sauerstoff in den Reaktor eingeleitet wird und anschließend die Körner aus dem Reaktor entfernt werden. Aus der US 5,228,484 A ist es bekannt, ein Plastikrohr in den Reaktor hineinzudrücken und Luft unter hohem Druck in die Masse aus den Körnern einzublasen. Dabei wird am oberen Ende des Reaktors gesaugt und dass durch die Druckluft hoch gespülte Körnermaterial abgeführt. Aus US 9,138,710 B2 ist es bekannt, ein biegsames, aber druckfestes Band in die Röhren eines Reaktors einzuführen, verwendet wird ein Einzugsband, wie es Elektriker zum Einziehen von Elektroleitungen in Kanäle verwenden. Aus KR 101580391 B1 ist eine Vorrichtung zum Entleeren mit einem Saugschlauch bekannt, der ein unteres, offenes Saugende hat, das sich im Reaktor befindet und der ein oberes Auslassende hat, dass an eine Saugvorrichtung angeschlossen ist und sich außerhalb des Reaktors befindet, bekannt. Diese Saugvorrichtung hat einen Zyklon und eine Vakuumpumpe. Diese Vorrichtung hat weiterhin eine Schlagmaschine, die als ein kleines Raupenfahrzeug mit Ketten ausgeführt ist und einen Sitz für eine Bedienperson aufweist, welche das Raupenfahrzeug und sich im Reaktor befindet. Diese bekannte Vorrichtung eignet sich vorzugsweise für sehr große Reaktoren. Es ist nicht zu ersehen, wie das Raupenfahrzeug durch das gezeigte kleine Mannloch in das Innere des Reaktors hineingebracht werden kann, jedenfalls ist das Raupenfahrzeug wesentlich größer als die lichte Öffnung des Mannlochs.

Die US2003/218085 beschreibt eine Vorrichtung und ein Verfahren zum Entleeren von festem Material aus einem Reaktor, mit einem Saugschlauch, der ein unteres, offenes Saugende hat, das sich im Reaktor befindet und der ein oberes Auslassende hat, das an eine Saugvorrichtung angeschlossen ist und sich außerhalb des Reaktors befindet, mit einer Schlagmaschine, die in der Nähe des Saugendes mit dem Saugschlauch verbunden ist, die einen Motor hat, der eine Ausgangswelle und ein um die Ausgangswelle drehbares Schlagwerkzeug aufweist, wobei das Schlagwerkzeug ein Zentralteil, das mit der Ausgangswelle verbunden ist und Aufnahmeöffnungen aufweist, und mindestens zwei, an diesem Zentralteil angeordnete Arme hat.

Hiervon ausgehend liegt der Erfindung die Aufgabe zugrunde, eine insbesondere für die 75 % der angegebenen Fälle geeignete, ausschließlich von außerhalb des Reaktors handhabbare einfach gestaltete Vorrichtung anzugeben, die das Entleeren des Reaktors vereinfacht. Diese Aufgabe wird durch eine Vorrichtung mit den Merkmalen des Patentanspruchs 1 gelöst.

Weiterhin ist es Aufgabe der Erfindung, ein Verfahren anzugeben, das mit dieser Vorrichtung arbeitet und ein einfaches Entleeren eines Reaktors ermöglicht. Diese Aufgabe wird durch ein Verfahren mit den Merkmalen des Patentanspruchs 9 gelöst.

Das erfindungsgemäße Verfahren und die Vorrichtung setzen eine Kombination aus Saugen und impulsförmigem Schlagen ein. Die Saugvorrichtung ist für das Ansaugen und Abtransportieren aus dem Reaktor von absaugbaren Körnern zuständig. Die unmittelbar vor dem Saugende angeordnete Schlagmaschine ist dafür zuständig, eine eventuell zusammenhängende Masse an Körnern so weit zu lockern, dass sie absaugbar sind, also von der Saugvorrichtung erfasst und abtransportiert werden können.

Das Schlagwerkzeug der Schlagmaschine wird durch den Motor angetrieben. Die Arme des Schlagwerkzeugs sind nicht starr und können daher beim praktischen Einsatz nicht von hartem Material dauerhaft blockiert werden. Wenn die Arme auf harten Widerstand stoßen, wird die Drehbewegung abgebremst und kommt eventuell sogar zum Erliegen. Dann fallen die Kettenglieder, die die Arme bilden, schlaff herab. Wenn der Motor dann weiterdreht, richten sich die Arme aufgrund der Zentrifugalbeschleunigung wieder quer zur Wellenachse aus und kommen erneut mit festem Material in Berührung. Diese Berührung ist, und hierin liegt ein wesentliches Merkmal der Erfindung, impulsartig. Durch die Drehbewegung des Motors werden die Kettenglieder gegen das aus den Körnern bestehende Material geschleudert. Die Kettenglieder übertragen ihren Bewegungsimpuls auf die Masse an Körnern, die dadurch aufgelockert wird. Demgemäß müssen die Kettenglieder eine ausreichende Masse und eine ausreichende Geschwindigkeit haben. Sie wirken ähnlich wie wiederholte Hammerschläge auf das Material ein.

Da sich das Schlagwerkzeug unterhalb des Saugendes befindet und die Arme im Arbeitszustand zumindest einen Teil der Fläche des Saugendes überstreichen, wird durch die Schlagmaschine jeweils der Anteil an fester oder lockerer Materie erfasst, der sich unmittelbar unter dem Saugende befindet und daher angesaugt werden kann.

Als Motor hat sich insbesondere ein Druckluftmotor bewährt. Es kann auch ein hydraulischer Motor oder ein Elektromotor mit einer entsprechend dem Einsatz hohen Schutzklasse verwendet werden. Die Kettenglieder haben vorzugsweise eine ausreichend große Masse, ihre Masse liegt vorzugsweise oberhalb 20 g, insbesondere oberhalb 50 g und vorzugsweise unterhalb 200 g. Die Masse der Kettenglieder eines Arms soll aber auch nicht zu hoch sein, sie sollte im Bereich 100 bis 600 g liegen. Die Gesamtmasse des Schlagwerkzeugs soll unter einem oberen Limit bleiben, beispielsweise unter 5 kg. Es soll sichergestellt sein, dass abgestimmt auf das Drehmoment des Motors ein ausreichend rascher Anlauf erreicht wird und die Masse des einzelnen Kettengliedes abgestimmt ist auf die nötigen Impulse, die auf das Material der Körner ausgeübt werden müssen, um dieses Material aufzulockern. Wie bei der Auswahl eines leichten oder schweren Hammers wählt man leichte oder schwere Kettenglieder, die jeweils für den konkreten Einsatz geeignet sind.

Die Umdrehungszahl pro Minute des Schlagwerkzeugs im Arbeitszustand liegt im Bereich von 30 bis 150 U/min, insbesondere 50 bis 90 U/min. Die Arme haben vorzugsweise eine Länge von 50 bis 200, insbesondere 50 bis 150 mm.

Jeder Arm, wenn er aus mehreren Kettengliedern zusammengesetzt ist, bildet in einer bevorzugten Ausführung einen linearen Strang. Die Kettenglieder sind dann in Reihe hintereinander angeordnet. Die Kettenglieder sind stets frei gelenkig miteinander verbunden. Das dem Zentralteil nächste Kettenglied ist frei gelenkig in der Aufnahmeöffnung angeordnet. Das Zentralteil ist möglichst klein ausgebildet, sodass es im Wesentlichen nur die Verbindung mit der Ausgangswelle und die Aufnahmeöffnungen aufweist. Es ist vorzugsweise eine runde Scheibe. Es hat beispielsweise einen Durchmesser von 30 bis 80, insbesondere 40 bis 70 mm. Die Drehzahl der Wellenachse ist so ausreichend hoch gewählt, dass die Arme nach außen wegfliegen und damit quer zur Wellenachse stehen, wenn der Motor dreht und der Arbeitszustand vorliegt. Der Motor gibt ein ausreichend hohes Drehmoment an die Wellenachse ab, damit die Kettenglieder ausreichend beschleunigt werden, um zentrifugal nach außen wegzustehen. Bevorzugt reicht eine Umdrehung oder nur eine halbe Umdrehung des Zentralteils, um die Kettenglieder aus dem Stand nach außen zu schleudern.

Im praktischen Betrieb wird der oben beschriebene Ruhezustand nicht immer so erreicht, dass die Arme frei herunterhängen. Häufig ist es so, dass sich unterhalb des Schlagwerkzeugs festes Material befindet. Dann können die Kettenglieder nicht frei nach unten herabhängen. Sie können jedoch aufgrund ihrer gelenkigen Anordnung stets irgendeine Position finden, in der sie soweit nach innen zurückbewegt sind, dass sie ein erneutes Anlaufen des Motors nicht behindern. Die Erfindung verwendet bewusst keine starren Arme und auch keine starre Anlenkung der Arme an das Zentralteil, weil derartige Arme sich im Material der Körner verklemmen könnten. Bei den gelenkig ausgebildeten Armen nach der Erfindung bieten die Arme kein starres Hindernis.

Vorzugsweise hat jeder Arm zwei oder drei Kettenglieder. Die Kettenglieder sind insbesondere aus einem Metall oder einem schweren Kunststoff gefertigt. Insbesondere sind sie aus Bronze gefertigt. Für den praktischen Einsatz hat es sich bewährt, als Kettenglieder sogenannte Schäkel zu verwenden, hier können einzelne Kettenglieder leicht ausgetauscht werden. Die Arme sind vorzugsweise baugleich.

Die Verwendung der erfindungsgemäßen Vorrichtung hat sich selbst für die o.g. 25 % der Fälle bewährt, in denen das Katalysatormaterial immer noch frei fließt. Im Vergleich zum reinen Absaugen (ohne weitere Unterstützung) wird durch die zusätzliche Schlagmaschine erreicht, dass die Belastung der Saugseite konstanter ist. Es erfolgen weniger schlagartige Änderungen des Flusses an Körnern im Saugschlauch.

In bevorzugter Weiterbildung ist eine Manipulationseinrichtung vorgesehen, die ein Zugglied hat, welches an einem unteren Ende am Motor oder in Nähe des Saugendes am Saugschlauch befestigt ist und an einem oberen Ende aus dem Reaktor herausragt. Dabei ist das Zugglied vorzugsweise entweder flexibel, aber zugfest oder starr. Über die Manipulationseinrichtung kann die Einheit aus Motor und Saugschlauch innerhalb des Reaktors manipuliert und positioniert werden. Dies kann von außerhalb des Reaktors erfolgen. Im Reaktor befinden sich üblicherweise eine Kamera und eine Lichtquelle, so das der Ablauf eines Entleerens überwacht werden kann. Die Manipulationseinrichtung kann dahingehend weitergebildet werden, dass sie eine Schrägstellung des Saugendes ermöglicht, eine Kreisbewegung des Saugendes um eine Achse durchführt usw.

Die Ausgangswelle verläuft bevorzugt im Wesentlichen parallel zur Richtung des Saugschlauchs im Bereich des Saugendes. Die Arme des Schlagwerkzeugs sollen sich im Arbeitszustand quer zur Saugrichtung am Saugende des Saugschlauchs bewegen. Es ist möglich, die Ausgangswelle in einem Winkel von bis zu 30°, vorzugsweise bis zu 15° zur Saugrichtung anzustellen. Es ist möglich, das Saugende in einem Winkel von 90° zur Achse des Saugschlauchs oder in einem Winkel von 90° bis zu 45°, insbesondere bis zu 90° minus 25° zu dieser Achse einzuschrägen. Dabei ist der höchste Punkt der Schräge dem Motor am nächsten.

Das Trennen von Saugluft und Körnern am oberen Auslassende des Saugschlauchs erfolgt nach dem Stand der Technik, insbesondere nach der o.g. KR-Schrift. Die Saugluft wird vorzugsweise im Umlaufbetrieb verwendet. Sie wird auch zum Betrieb des Druckluftmotors eingesetzt. Im Reaktor wird über einen eventuellen Druckluftmotor oder eine andere Zuleitung so viel an Saugluft zurückgeführt, dass sich im Reaktor ein gewünschter Druck bildet. Dieser kann zum Beispiel im Bereich von 4 bis 7 bar Überdruck liegen. Er kann noch kleiner sein und gering im Unterdruckbereich liegen. Die Saugluft hat einen Sauerstoffanteil kleiner 6 %. Vorzugsweise wird als Saugluft Stickstoff eingesetzt.

Der Saugschlauch ist vorzugsweise halbflexibel. Er ist ausreichend abriebfest, damit er durch die abrasiven Körner nicht zu schnell abnutzt. Verwendet werden Schläuche mit zum Beispiel etwa 100 mm lichtem Durchmesser. Aufgrund seiner Flexibilität kann der Saugschlauch im Reaktor positioniert werden. Die Schlagmaschine wird über eine flexible Versorgungsleitung, insbesondere eine flexible Druckluftleitung, mit Antriebsenergie versorgt.

Die Kettenglieder sollten sich möglichst frei gegeneinander und in der Aufnahmeöffnung bewegen können. Hierzu hat die Aufnahmeöffnung ein erhebliches Übermaß von vorzugsweise mindestens 100 % gegenüber den entsprechenden Abmessungen der Kettenglieder, z.B. dem Durchmesser des Materials der Glieder.

Im praktischen Betrieb soll sich kein kompaktes Material aus den Körnern zwischen dem Schlagwerkzeug und dem Saugende befinden. Zwischen Schlagwerkzeug und Saugende sollen sich nur Körner befinden, die unmittelbar abgesaugt werden können. Vorzugsweise über streicht im praktischen Betrieb das Schlagwerkzeug mit seinen Armen das Saugende vollständig, die Arme können vorzugsweise so lang sein, dass sie bis zu 50 %, insbesondere bis zu 30 % über das Saugende vorstehen, wenn der Arbeitszustand vorliegt.

Ein Ausführungsbeispiel der Erfindung wird im Folgenden unter Bezugnahme auf die Zeichnung näher beschrieben. Dieses Ausführungsbeispiel zeigt weitere Merkmale der Erfindung, es ist nicht einschränkend zu verstehen, es dient dem besseren Verständnis der Erfindung. In der Zeichnung zeigen:
- Figur 1:: Eine prinzipielle Darstellung in im Wesentlichen schnittbildlicher Ansicht eines Reaktors, der gerade entleert wird, ein Teil des Materials aus Körnern befindet sich noch in dem Reaktor, gezeigt ist eine Vorrichtung zum Entleeren mit einem Saugschlauch und einer Schlagmaschine, weiterhin gezeigt ist eine Manipulationseinrichtung,
- Fig. 2:: eine perspektivische Darstellung eines unteren Endes des Saugschlauches und der daran befindlichen Schlagmaschine,
- Fig. 3:: ein Element III aus Fig. 2 in vergrößerter Darstellung und
- Fig. 4:: eine Untersicht auf die Anordnung gemäß Fig. 2.

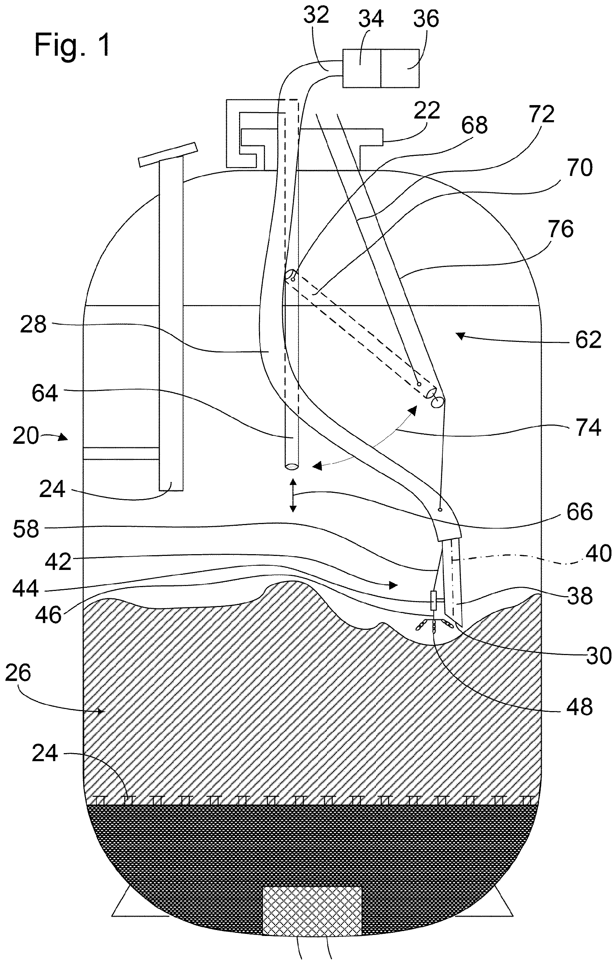

Figur 1 zeigt einen Reaktor 20, der hier als Druckbehälter für 4 - 7 bar Überdruckausgeführt ist. Er hat einen zylindrischen Mittelteil und unten und oben domförmige Endbereiche. Im oberen Endbereich ist ein Mannloch 22 vorgesehen, es ist geöffnet. Im Inneren des Reaktors 20 befinden sich Einbauten 24, die für den praktischen Betrieb notwendig sind, hier aber nur deshalb gezeichnet sind, weil sie den Entleerungsvorgang behindern können.

Der Reaktor 20 ist bereits teilentleert, gezeigt ist ein Zwischenzustand des Entleerens. Es befindet sich aus Körnern bestehendes Material 26 noch im unteren Teil des Innenraums des Reaktors 20.

Durch das Mannloch 22 ist ein Saugschlauch 28 geführt. Er hat ein unteres, offenes Saugende 30 und ein oberes Auslassende 32. Dieses ist an eine Saugvorrichtung angeschlossen, die sich aus einem Zyklon 34 und einer Pumpe 36 für gasförmige Medien zusammensetzt. Die Pumpe 36 liefert den notwendigen Saugdruck. Im Zyklon 34 werden die Partikel abgetrennt.

Der Saugschlauch 28 ist im Wesentlichen flexibel ausgeführt, er kann dadurch die in der Figur gezeigten Krümmungen einnehmen. In seinem untersten Ende, das auch das Saugende 30 bildet, ist er jedoch als starres Rohr 38 ausgebildet. Das Saugende 30 verläuft schräg zu einer Achse 40 des Saugschlauchs 28. Hierauf wird später noch eingegangen. Der Saugschlauch 28 hat einen inneren Durchmesser von ungefähr 100 mm.

Am starren Rohr 38 des Saugschlauchs 28 ist eine Schlagmaschine 42 befestigt. Sie befindet sich in Nähe des Saugendes 30, nämlich teilweise oberhalb dieses Saugendes 30 und teilweise unterhalb dieses Saugendes 30. Sie hat einen Motor 44, der der sich oberhalb des Saugendes 30 befindet und eine Ausgangswelle 46 hat. Diese verläuft im Wesentlichen parallel zur Achse 40. An der Ausgangswelle 46 ist ein Schlagwerkzeug 48 angeordnet. Es hat ein Zentralteil 50, das fest mit der Ausgangswelle 46 verbunden ist, und an diesem angeordnete Arme 52. Insgesamt sind vier baugleiche und gleich verteilt um die Ausgangswelle 46 angeordnete Arme 52 vorgesehen.

Das Zentralteil 50 hat für jeden Arm 52 eine Aufnahmeöffnung 54. Die Arme 52 bestehen jeweils aus drei Kettengliedern 56, diese sind untereinander baugleich und in baugleicher Art angeordnet. Ein innerstes Kettenglied 56 durchgreift jeweils mit großem Spiel eine Aufnahmeöffnung 54, das danach folgende, zweite Kettenglied 56 ist frei gelenkig mit dem ersten Kettenglied 56 verbunden, das dritte Kettenglied 56 ist wiederum ebenso gelenkig mit dem zweiten Kettenglied 56 verbunden. Die Kettenglieder 56 haben eine Länge von 20 bis 80 mm, vorzugsweise liegt die Länge bei etwa 60 mm. Die Länge aller 3 Kettenglieder 56 eines Arms 22 liegt im Bereich von 60 bis 175 mm, vorzugsweise bei etwa 70 mm. Der Abstand der Ausgangswelle 46 von der Achse 40, die beide parallel zueinander verlaufen, liegt im Bereich von 60 bis 100 mm, insbesondere bei 80 mm.

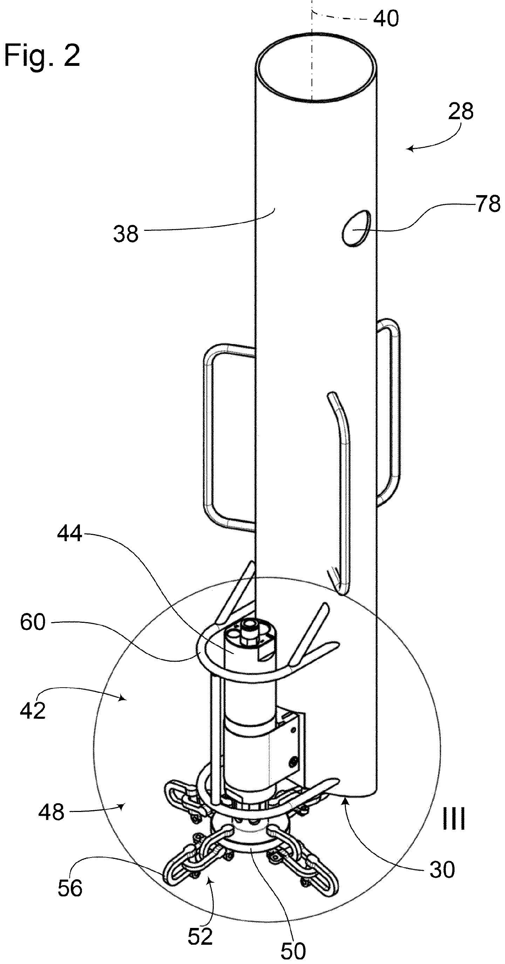

Die Figuren 2 bis 4 zeigen das Schlagwerkzeug 48 jeweils im Arbeitszustand, in diesem Zustand dreht der Motor 44 und schleudert die Arme 52 radial nach außen in die gezeigte Position. Dreht der Motor 44 nicht, fallen die Kettenglieder 56 unter der Wirkung der Schwerkraft nach unten. Dies gilt insbesondere für das zweite und dritte Kettenglied 56. Das erste Kettenglied 56 kann gegenüber dem Zentralteil 50 zumindest um eine Achse geschwenkt werden, die parallel zur Ausgangswelle 46 ist. Es kann aber auch größere Freiheiten der Bewegung aufweisen, um weitere Bewegungen durchführen zu können.

Der Motor 44 ist so nahe wie möglich am Saugschlauch 28 positioniert. Der Abstand zwischen dem Saugschlauch 28 und der Antriebswelle 46 liegt vorzugsweise im Bereich von 30 bis 80 mm. Der Motor 44 ist über eine Zuleitung 58 verbunden, mit der er mit Energie v ersorgt wird und über die er gesteuert wird. Diese Zuleitung 58 ist durch das Mannloch 22 oder anderweitig nach außen, außerhalb des Reaktors 20, geführt.

Die Schlagmaschine 42 ist mechanisch am starren Rohr 38 befestigt. Vom starren Rohr 38 Schutzbügel 60 springen vor, die den Motor 44 frei umgreifen und schützen.

Mithilfe einer Manipulationseinrichtung 62 kann die Position der Einheit aus dem starren Rohr 38 und der Schlagmaschine 42 im Inneren des Reaktors 20 positioniert werden. Die Manipulationseinrichtung 62, die hier beispielhaft gezeigt ist und in vielerlei anderer Ausbildungen realisiert werden kann, hat eine starre Haltestange 64, die am Mannloch 22 festgelegt ist. Sie kann um ihre Längsachse gedreht werden. Sie kann vorzugsweise auch in Richtung des Doppelpfeils 66 nach oben eingezogen und nach unten verschoben werden. In diesem veränderbaren Bereich der Haltestange 64 ist in einem Anlenkpunkt 68 eine Querstange 70 angelenkt, die eine Länge von etwa 20 bis 40% des Innenradius des Reaktors 20 hat. An ihrem freien Ende ist ein erstes Zugseil 72 befestigt, das durch das Mannloch 20 nach außen geführt ist. Durch dieses erste Zugseil 72 kann die Querstange 70 im Bereich des Winkelpfeils 74 verschwenkt werden.

Am freien Ende der Querstange 70 ist weiterhin eine Führung für ein zweites Zugseil 76 vorgesehen, das nach oben hin ebenfalls durch das Mannloch 22 reicht und unten am starren Rohr 38 befestigt ist. Mit dem zweiten Zugseil 76 kann der Saugschlauch 28 mehr oder weniger gekrümmt werden. Insbesondere die Schlagmaschine 42 hält mit ihrem Gewicht das Saugende 30 nach unten. Das zweite Zugseil 76 greift oberhalb der Schlagmaschine 42, hier etwas oberhalb des starren Rohrs 38 an. Das Gewicht zieht das starre Rohr 38 im Wesentlichen in die lotrechte Lage, bei der die Achse 40 nahezu senkrecht verläuft.

Es sind auch andere Manipulationseinrichtungen 62 möglich. Beispielsweise kann mit einem einzigen Zugmittel gearbeitet werden.

Wie aus allen Figuren ersichtlich ist, befindet sich das Schlagwerkzeug 48 unterhalb des Saugendes 30. Es soll vor und unterhalb des Saugendes 30 mechanisch arbeiten. Wie bereits erwähnt, ist das Saugende 30 angeschrägt, dadurch folgt das Saugende einer Ellipse. Die Schräge hat einen Winkel von etwa 30° zur Achse 40. Die Schräge ist so ausgebildet, dass ihr tiefstes Ende die größte Entfernung von der Ausgangswelle 46 hat.

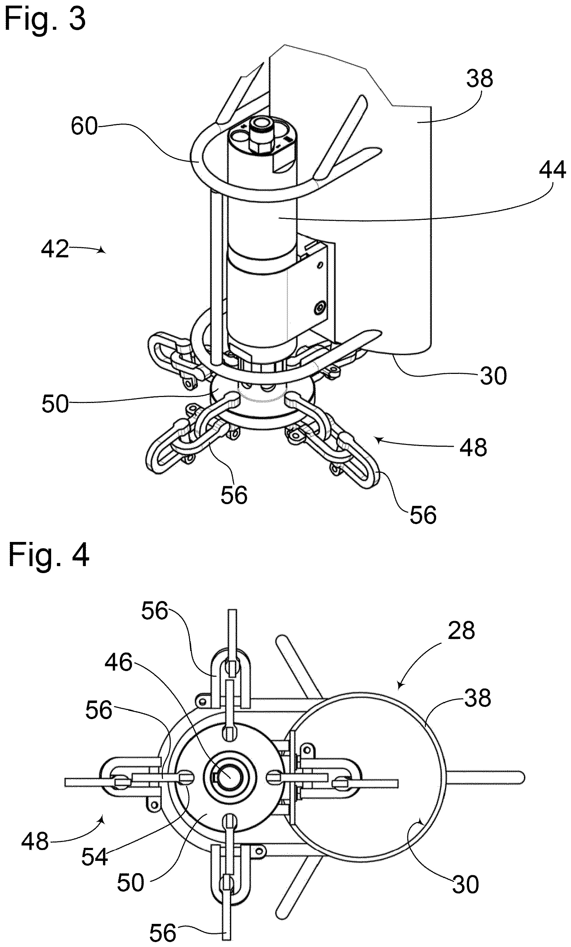

Wie insbesondere Figur 4 zeigt, überstreichen die Arme 52 bei ihrer Drehbewegung einen großen Teil der Fläche des Saugendes 30. Im Arbeitszustand befinden sich die Arme 52 10 bis 80 mm unterhalb des angeschrägten Saugendes 30. Die Arme 52 kommen niemals mit dem starren Rohr 38 bzw. dem Saugende 30 in Kontakt. Selbst in optimaler Querstellung der Arme 52 befinden sie sich unterhalb des Saugendes 30.

Im Saugschlauch 38 ist ein Lufteinlass 78 vorgesehen. In ihn kann Luft einströmen, sollte das Saugende 30 verstopft sein.

Beim praktischen Durchführen des Verfahrens wird zunächst eine Strömung an Saugluft im Saugschlauch 28 vom Saugende 30 zum Auslassende 32 erzeugt. Hierzu wird die Pumpe 36 in Betrieb gesetzt. Gleichzeitig wird der Motor 44 angeschaltet. Nun kann die Einheit aus Saugschlauch 28 und Schlagmaschine 42 auf das Material 26 abgesenkt werden. Diese Einheit kann sich aber auch schon auf diesem Material 26 befinden. Durch die Drehbewegung werden die Arme 52 nach außen geschleudert und treffen auf das aus Körnern bestehendes Material 26, sodass das Material 26 gelockert wird. Es werden Körner in unmittelbarer Nähe des Saugendes 30 frei geschlagen und durch den Saugschlauch 28 nach oben transportiert. Bei Beginn oder nach einer Arbeitsunterbrechung des Entleerens wird die Einheit aus Saugschlauch 28 und Schlagmaschine 42 von oben auf das aus Körnern bestehende Material 26 abgesenkt, so dass das Schlag-werkzeug 48 in Kontakt mit dem Material 26 kommt. Im Saugschlauch 28 wird die Saugluft zusammen mit den Körnern nach oben aus dem Mannloch 22 transportiert. Im Zyklon 34 werden feste und gasförmige Stoffe voneinander getrennt. Die Saugluft wird von der Pumpe 36 verdichtet, der Ausgang der Pumpe 36 ist mit einer Leitung (hier nicht dargestellt) verbunden, die die Saugluft wieder letztendlich in den Reaktor 20 einführt. Der Motor 44 wird vorzugsweise mit Saugluft betrieben.

Wenn bei der praktischen Durchführung das Schlagwerkzeug 48 auf zu hartes Material 26 trifft, werden die Kettenglieder 56 eingefaltet. Da in der Regel hartes Material 26 nur in einem beschränkten Winkelbereich der 360° Rotation der Arme 52 auftritt, schwenkt die Einheit aus Saugschlauch 28 und Schlagmaschine 42 aufgrund des Auftreffens selbstständig aus dem Wickelbereich heraus. Aufgrund des zumindest halbflexiblen Saugschlauch 28 und der flexiblen Zuleitung 58 kann die Einheit aus Saugende 30 und Schlagmaschine 42 hin- und herpendeln. Sie kann dadurch einem Hindernis ausweichen.

Die Vorrichtung zum Entleeren von körnigem Katalysatormaterial aus einem Reaktor 20 weist einen Saugschlauch 28, der ein unteres, offenes Saugende 30, das sich im Reaktor 20 befindet und der ein oberes Auslassende 32 hat, das an eine Saugvorrichtung angeschlossen ist und sich außerhalb des Reaktors 20 befindet und eine Schlagmaschine 42 auf, die in der Nähe des Saugendes 30 mit dem Saugschlauch 28 verbunden ist, die einen Motor 44, der eine Ausgangswelle 46 hat, und ein um die Ausgangswelle 46 drehbares Schlagwerkzeug 48 aufweist. Das Schlagwerkzeug 48 weist ein mit der Ausgangswelle 46 verbundenes Zentralteil 50, das ist und Aufnahmeöffnungen 54 aufweist, und mindestens zwei, an diesem Zentralteil 50 angeordnete Arme 52 auf. Jeder Arm 52 hat mindestens ein Kettenglied 56, das frei gelenkig in einer der Aufnahmeöffnungen 54 angeordnet ist. In einem Ruhezustand hängen die Arme 52 vom Zentralteil 50 frei nach unten. In einem Arbeitszustand der Vorrichtung befinden sich die Arme 52 quer zur Wellenachse. Die Arme 52 befinden sich stets unterhalb des Saugendes 30. Im Arbeitszustand überstreichen die Arme 52 bei ihrer Bewegung die Fläche des Saugendes 30 zumindest teilweise, ohne aber das Saugende 30 zu berühren.

### Bezugszeichenliste

- 20: Reaktor
- 22: Mannloch
- 24: Einbauten
- 26: Material
- 28: Saugschlauch
- 30: Saugende
- 32: Auslassende
- 34: Zyklon
- 36: Pumpe
- 38: starres Rohr
- 40: Achse
- 42: Schlagmaschine
- 44: Motor
- 46: Ausgangswelle
- 48: Schlagwerkzeug
- 50: Zentralteil
- 52: Arm
- 54: Aufnahmeöffnung
- 56: Kettenglied
- 58: Zuleitung
- 60: Schutzbügel
- 62: Manipulationseinrichtung
- 64: Haltestange
- 66: Doppelpfeil
- 68: Anlenkpunkt
- 70: Querstange
- 72: 1. Zugseil
- 74: Winkelpfeil
- 76: 2. Zugseil
- 78: Lufteinlass

## Patentansprüche

1. Vorrichtung zum Entleeren von körnigem Katalysatormaterial aus einem Reaktor (20),
- mit einem Saugschlauch (28), der ein unteres, offenes Saugende (30) hat, das sich im Reaktor (20) befindet und der ein oberes Auslassende (32) hat, das an eine Saugvorrichtung angeschlossen ist und sich außerhalb des Reaktors (20) befindet,
- mit einer Schlagmaschine (42), die in der Nähe des Saugendes (30) mit dem Saugschlauch (28) verbunden ist, die einen Motor (44) hat, der eine Ausgangswelle (46) und ein um die Ausgangswelle (46) drehbares Schlagwerkzeug (48) aufweist, wobei das Schlagwerkzeug (48) ein Zentralteil (50), das mit der Ausgangswelle (46) verbunden ist und Aufnahmeöffnungen (54) aufweist, und mindestens zwei, an diesem Zentralteil (50) angeordnete Arme (52) hat, wobei jeder Arm (52) mindestens ein Kettenglied (56) aufweist, das frei gelenkig in einer der Aufnahmeöffnungen (54) angeordnet ist, in einem Ruhezustand hängen die Arme (52) vom Zentralteil (50) frei nach unten und in einem Arbeitszustand der Vorrichtung befinden sich die Arme (52) quer zur Wellenachse, wobei die Arme (52) sich stets unterhalb des Saugendes (30) befinden und im Arbeitszustand bei ihrer Bewegung die Fläche des Saugendes (30) zumindest teilweise überstreichen, aber das Saugende nicht berühren.

2. Vorrichtung nach Anspruch 1, **dadurch gekennzeichnet, dass** sie zudem eine Manipulationseinrichtung (62) aufweist, die ein Zugglied, insbesondere ein zweites Zugseil (76) hat, welches mit seinem unteren Ende am Motor (44) oder in Nähe des Saugendes (30) am Saugschlauch (28) befestigt ist und an seinem oberen Ende aus dem Reaktor (20) herausragt, wobei das Zugglied vorzugsweise entweder flexibel, aber zugfest oder starr ist.

3. Vorrichtung nach einem der vorangegangenen Ansprüche, **dadurch gekennzeichnet, dass** jeder Arm (52) mindestens drei Kettenglieder (56) aufweist, die frei gelenkig miteinander bzw. mit dem Zentralteil (50) verbunden sind.

4. Vorrichtung nach einem der vorangegangenen Ansprüche, **dadurch gekennzeichnet, dass** die Kettenglieder (56) eine Masse von mindestens 20 g, insbesondere mindestens 50 g, vorzugsweise unter 300 g aufweisen.

5. Vorrichtung nach einem der vorangegangenen Ansprüche, **dadurch gekennzeichnet, dass** die Ausgangswelle (46) im Wesentlichen parallel zur Richtung des Saugschlauchs (28) im Bereich des Saugendes (30) verläuft.

6. Vorrichtung nach einem der vorangegangenen Ansprüche, **dadurch gekennzeichnet, dass** die Saugvorrichtung einen Separator, insbesondere Zyklon (34), und dahinter eine Pumpe (36) aufweist.

7. Vorrichtung nach einem der vorangegangenen Ansprüche, **dadurch gekennzeichnet, dass** die Arme (52) baugleich sind.

8. Vorrichtung nach einem der vorangegangenen Ansprüche, **dadurch gekennzeichnet, dass** die Kettenglieder (56) baugleich sind.

9. Verfahren zum Entleeren von körnigem Katalysatormaterial aus einem Reaktor (20) unter Verwendung einer Vorrichtung nach einem der vorangegangenen Ansprüche, **dadurch gekennzeichnet, dass** es die folgenden Verfahrensschritte aufweist:
a) Ausbilden einer Strömung an Saugluft im Saugschlauch (28) vom Saugende (30) zum Auslassende (32) und gleichzeitig
b) Betrieb des Motors (44) und dadurch Schleudern der Arme (52) gegen aus Körnern bestehendes Material (26), sodass das Material gelockert und Körner in unmittelbarer Nähe des Saugendes (30) frei geschlagen und durch den Saugschlauch (28) nach oben transportiert werden.

10. Verfahren nach Anspruch 9, **dadurch gekennzeichnet, dass** bei Beginn oder nach einer Arbeitsunterbrechung des Entleerens die Einheit aus Saugschlauch (28) und Schlagmaschine (42) von oben auf das aus Körnern bestehende Material (26) abgesenkt wird, so dass das Schlagwerkzeug (48) in Kontakt mit dem Material (26) kommt.

## Claims

1. A device for emptying granular catalyst material from a reactor (20),
- with a suction hose (28) having a lower open suction end (30), which is located in the reactor (20), and an upper outlet end (32), which is connected to a suction device and is located outside the reactor (20),
- with a percussion machine (42), which is connected in the vicinity of the suction end (30) to the suction hose (28), which has a motor (44) having an output shaft (46) and a percussion tool (48) rotatable about the output shaft (46), wherein the percussion tool (48) has a central part (50), which is connected to the output shaft (46) and has accommodating openings (54), and at least two arms (52) disposed on this central part (50), wherein each arm (52) has at least one chain link (56) which is disposed in a freely articulated manner in one of the accommodating openings (54), in a non-operating state, the arms (52) hang freely downward from the central part (50), and in an operating state of the device, the arms (52) are located transversely to the shaft axis, wherein the arms (52) are always located underneath the suction end (30) and, in the operating state, at least partially sweep across the area of the suction end (30) when moving, but do not contact the suction end.

2. The device according to claim 1, **characterized in that** it further comprises a manipulation device (62) including a pulling member, particularly a second pulling cable (76), which is attached with its lower end to the motor (44) or to the suction hose (28) in the vicinity of the suction end (30) and protrudes at its upper end from the reactor (20), wherein the pulling member preferably is either flexible but of high tensile strength, or rigid.

3. The device according to any one of the preceding claims, **characterized in that** each arm (52) has at least three chain links (56) connected in a freely articulated manner to one another or to the central part (50).

4. The device according to any one of the preceding claims, **characterized in that** the chain links (56) have a mass of at least 20 g, in particular at least 50 g, preferably less than 300 g.

5. The device according to any one of the preceding claims, **characterized in that** the output shaft (46) extends substantially parallel to the direction of the suction hose (28) in the region of the suction end (30).

6. The device according to any one of the preceding claims, **characterized in that** suction device has a separator, in particular a cyclone (34), and a pump (36) downstream thereof.

7. The device according to any one of the preceding claims, **characterized in that** the arms (52) are structurally identical.

8. The device according to any one of the preceding claims, **characterized in that** the chain links (56) are structurally identical.

9. A method for emptying granular catalyst material from a reactor (20) using a device according to any one of the preceding claims, **characterized in that** it comprises the following method steps:
a) forming a flow of suction air in the suction hose (28) from the suction end (30) to the outlet end (32), and at the same time
b) operating the motor (44), and thereby hurling the arms (52) against material (26) consisting of grains, so that material is loosened and grains in the direct vicinity of the suction end (30) are knocked free and transported upwards through the suction hose (28).

10. The method according to claim 9, **characterized in that**, at the start or after an interruption of the emptying operation, the unit consisting of the suction hose (28) and the percussion machine (42) is lowered from above onto the material (26) consisting of grains, so that the percussion tool (48) comes into contact with the material (26).

## Revendications

1. Dispositif destiné à évacuer du matériau catalytique granulaire d'un réacteur (20),
- avec un tuyau flexible d'aspiration (28) qui présente une extrémité d'aspiration inférieure (30) ouverte laquelle est située dans le réacteur (20), et qui présente une extrémité supérieure de sortie (32) laquelle est reliée à un dispositif d'aspiration et est située à l'extérieur du réacteur (20),
- avec une machine à percussion (42) qui est reliée au tuyau flexible d'aspiration (28) à proximité de l'extrémité d'aspiration (30) et qui comprend un moteur (44) qui présente un arbre de sortie (46) et un outil à percussion (48) apte à tourner autour de l'arbre de sortie (46), dans lequel ledit outil à percussion (48) comprend une partie centrale (50) qui est reliée à l'arbre de sortie (46) et présente des ouvertures de réception (54), ainsi qu'au moins deux bras (52) qui sont disposés sur cette partie centrale (50), dans lequel chaque bras (52) présente au moins un maillon de chaîne (56) qui est disposé à libre articulation dans l'une des ouvertures de réception (54), les bras (52) pendent librement vers le bas depuis la partie centrale (50) dans un état de repos et les bras (52) sont situés transversalement à l'axe d'arbre dans un état de travail du dispositif, dans lequel les bras (52) sont toujours situés au-dessous de l'extrémité d'aspiration (30), et, en état de travail, lorsqu'ils se déplacent, ils balaient au moins en partie la surface de l'extrémité d'aspiration (30), mais ne touchent pas l'extrémité d'aspiration.

2. Dispositif selon la revendication 1, **caractérisé par le fait qu'**il comprend en plus un dispositif de manipulation (62) qui comprend un organe de tension, en particulier un deuxième câble de tension (76) qui est fixé par son extrémité inférieure sur le moteur (44) ou à proximité de l'extrémité d'aspiration (30) sur le tuyau flexible d'aspiration (28) et fait saillie du réacteur (20) à son extrémité supérieure, dans lequel l'organe de tension est de préférence soit flexible, mais résistant à la traction, soit rigide.

3. Dispositif selon l'une quelconque des revendications précédentes, **caractérisé par le fait que** chaque bras (52) comprend au moins trois maillons de chaîne (56) qui sont reliés à libre articulation entre eux ou bien à la partie centrale (50).

4. Dispositif selon l'une quelconque des revendications précédentes, **caractérisé par le fait que** les maillons de chaîne (56) présentent une masse d'au moins 20 g, en particulier d'au moins 50 g, de préférence inférieure à 300 g.

5. Dispositif selon l'une quelconque des revendications précédentes, **caractérisé par le fait que** l'arbre de sortie (46) s'étend pour l'essentiel parallèlement à la direction du tuyau flexible d'aspiration (28) au niveau de l'extrémité d'aspiration (30).

6. Dispositif selon l'une quelconque des revendications précédentes, **caractérisé par le fait que** le dispositif d'aspiration comprend un séparateur, en particulier un cyclone (34), et derrière celui-ci une pompe (36).

7. Dispositif selon l'une quelconque des revendications précédentes, **caractérisé par le fait que** les bras (52) sont de même construction.

8. Dispositif selon l'une quelconque des revendications précédentes, **caractérisé par le fait que** les maillons de chaîne (56) sont de même construction.

9. Procédé destiné à évacuer du matériau catalytique granulaire d'un réacteur (20) en utilisant un dispositif selon l'une quelconque des revendications précédentes, **caractérisé par le fait qu'**il comprend les étapes de procédé suivantes consistant à:
a) former un courant d'air d'aspiration dans le tuyau flexible d'aspiration (28) depuis l'extrémité d'aspiration (30) vers l'extrémité de sortie (32) et en même temps
b) faire fonctionner le moteur (44) et ainsi projeter les bras (52) contre du matériau (26) constitué de grains de sorte que le matériau se détache et que des grains à proximité immédiate de l'extrémité d'aspiration (30) sont libérés en frappant et sont transportés vers le haut à travers le tuyau flexible d'aspiration (28).

10. Procédé selon la revendication 9, **caractérisé par le fait que**, au début ou après une interruption de travail de la vidange, l'unité constituée du tuyau flexible d'aspiration (28) et de la machine à percussion (42) est abaissée d'en haut sur le matériau (26) constitué de grains de sorte que l'outil à percussion (48) entre en contact avec le matériau (26).
